# EUROPEAN PATENT SPECIFICATION

(11) **EP 2 885 940 B1**
(45) Date of publication and mention of the grant of the patent: **15.02.2023**
(21) Application number: 12882977.7
(22) Date of filing: 17.08.2012
(51) Int. Cl.: H04W 28/02

(54) **THROTTLING CELL NOTIFICATION**
BENACHRICHTIGUNG ÜBER ZELLENEINSCHRÄNKUNG
NOTIFICATION DE LIMITATION DE CELLULE

(43) Date of publication of application: 24.06.2015
(73) Proprietor: Telefonaktiebolaget LM Ericsson (publ), 164 83 Stockholm (SE)
(72) Inventor: SKOG, Robert, SE-165 76 Hässelby (SE)
(74) Representative: Zacco Sweden AB
(86) International application number: PCT/SE2012/050881
(87) International publication number: WO 2014/027935

(56) References cited:
- EP-A1- 2 472 946
- WO-A1-2011/001096
- WO-A1-2012/071283
- CN-A- 102 333 343
- US-A1- 2010 191 453
- US-A1- 2011 158 090
- US-A1- 2011 170 410
- US-A1- 2012 039 171
- US-A1- 2012 052 866

## Description

### TECHNICAL FIELD

The present invention relates generally to telecommunications networks and, more particularly to, methods and apparatus for communicating cell congestion information to a mobile communication device.

### BACKGROUND

A mobile connection can experience a large variation in the radio conditions. The radio conditions in this context refer to the available bandwidth to a user device or connection. Bandwidth reduction for a particular connection can result from an increase in traffic from such factors as users streaming video clips (including gaming) or movies for example. Bandwidth reduction affects the user experience or quality of service (QoS).

One method for mitigating the reduced QoS is the use of HTTP (hypertext transfer protocol) adaptive bit streaming. Video data is encoded at different bit rates and segmented into multi-second parts. A user's bandwidth and CPU capacity are detected in real time. Streaming takes place according to the available resources. Initially, a lower (or the lowest) bit rate video segment is streamed to the client or user. If the user download speed for a segment is greater than the streaming bit rate, a higher bit rate segment is requested by the user. If the download speed for a segment is lower than the bit rate, a lower bit rate segment is requested by the user.

Another method is the use of a proxy to perform a bit rate throttling by which the number of requests processed (or, responded to) by a server may be limited due to network congestion resulting from an increase in user requests, etc. Bit rate throttling may be implemented in radio cells where the number of users and their corresponding requests cause network congestion. That is, bit rate throttling may be implemented in specific cells in order for the users to share the cell capacity as opposed to a few users utilizing a disproportionate share of cell capacity.

As is well known, a feature of a mobile device is to facilitate user movement (i.e. not stationary) in a geographic area served by a plurality of non-overlapping cells of a mobile communication network while providing maintaining communication access. During this movement between cells, a mobile user can enter a crowded radio cell utilizing bit rate throttling - the user may have previously been located within another cell that is not crowded (and not utilizing bit rate throttling). Due to bit rate throttling in the crowded cell, the quality of the services, such as video that the user is viewing will no longer be presented in a manner that is satisfactory to the user. The user may experience freezing images, buffer re-loads, etc. This is not a good end-user experience since he/she may be unclear as to why the service will not work for this "cell" in the previous manner.

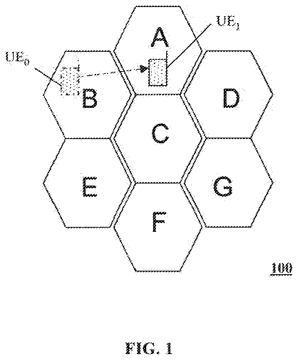

Referring to **FIG. 1****,** a cellular communication network 100 can include a plurality of cells (A, - - , G). A user using mobile communication device UE₀ (UE at time 0) can be viewing a video clip from a data source while the user is within cell B. That is, the user's connection to the data source is facilitated by cellular communication infrastructure assigned to cell B. As the user moves to (or, within) cell A, the communication between the user using mobile communication device UE₁ (UE at time 1) and the data source is facilitated by cell A. Cell B may not be congested and bit rate throttling is not utilized within this cell (i.e. cell B). Cell A, on the other hand, may be congested and bit rate throttling is utilized within this cell (i.e. cell A). As a result, the user experiences is degraded due to bit rate throttling in cell A that results in the afore-mentioned freezing images and constant buffering re-loading, etc.

European publication no. EP 24672946 A1 describes modifying a video transcoding based upon real time network conditions. Further, US publication no. 2012/0052866 A1 relates to enforcing network policies for subscribers in near congestion and congested cells. A need exists, therefore, for systems, methods and apparatus which can provide network and radio cell information to a user.

Document US 2010/191453 A1 describes a system and method for managing subscriber bandwidth based on cell congestion analysis. Based on the level of congestion, appropriate data rate is selected for the subscriber. D1 doesn't disclose sending a current congestion condition of the cell to the mobile device as a notification. Further, D1 doesn't indicate the user about when or why a service like video is not accessible for viewing or reasons for quality degradation, during movement.

### SUMMARY

The subject-matter of the invention is disclosed by the appended claims.

### BRIEF DESCRIPTION OF THE DRAWINGS

The objects and advantages of the invention will be understood by reading the following detailed description in conjunction with the drawings in which:
**FIG. 1** illustrates a communication network;
**FIG. 2** illustrates a system in accordance with exemplary embodiments;
**FIG. 3** illustrates a method in accordance with an exemplary embodiment;
**FIG. 4** illustrates a method in accordance with an alternative exemplary embodiment; and
**FIG. 5** illustrates a node in accordance with exemplary embodiments.

### DETAILED DESCRIPTION

The various features of the invention will now be described with reference to the figures, in which like parts are identified with the same reference characters or numerals.

The various aspects of the invention will now be described in greater detail in connection with a number of exemplary embodiments. To facilitate an understanding of the invention, many aspects of the invention are described in terms of sequences of actions to be performed by elements of a computer system or other hardware capable of executing programmed instructions. It will be recognized that in each of the embodiments, the various actions could be performed by specialized circuits (e.g., analog and/or discrete logic gates interconnected to perform a specialized function), by one or more processors programmed with a suitable set of instructions, or by a combination of both. The term "circuitry configured to" perform one or more described actions is used herein to refer to any such embodiment (i.e., one or more specialized circuits and/or one or more programmed processors).

Moreover, the invention can additionally be considered to be embodied entirely within any form of computer readable carrier, such as solid-state memory, magnetic disk, or optical disk containing an appropriate set of computer instructions that would cause a processor to carry out the techniques described herein. Thus, the various aspects of the invention may be embodied in many different forms, and all such forms are contemplated to be within the scope of the invention. For each of the various aspects of the invention, any such form of embodiments as described above may be referred to herein as "logic configured to" perform a described action, or alternatively as "logic that" performs a described action.

According to exemplary embodiments, users (of a mobile communication device) are provided with notification of cells implementing bit rate throttling if (the users are) requesting access to streaming data such as video. In one embodiment, a user may be within a congested cell that implements bit rate throttling when the request for data is initiated. In other embodiments, the user may be in a cell that is not congested at the initiation of the data request (and data receipt) but subsequently moves into a cell that is congested and implements bit rate throttling. The notification in the latter case may be provided upon the user entering the congested cell.

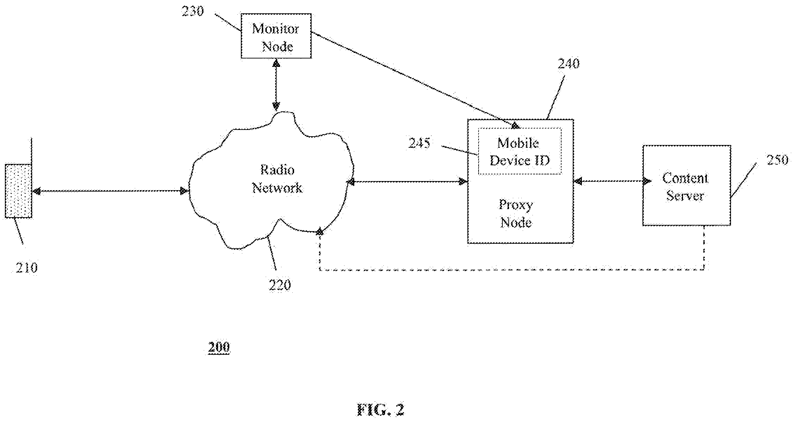

A system in accordance with exemplary embodiments is illustrated in FIG. 2. System 200 includes a proxy node 240 (or, proxy server) intermediate the radio network 220 and content server 250. A plurality of mobile communication devices 210 may access data from content server 250 via radio network 220 and proxy node 240.

System 200 also includes monitor node 230 for monitoring radio network 220. Monitor node 230 identifies cells within radio network 220 that are congested and where data communication can be subjected to bit rate throttling. Monitor node 230 can further identify mobile communication devices 210 within these identified (congested) cells. A mobile communication device can be identified by its Mobile Station International Subscriber Directory Number (MSISDN) or International Mobile Subscriber Identity (IMSI). The identities of these mobile communication devices is provided (and updated) to the proxy node 240. Proxy node 240 can include a storage medium such as memory 245 for storing a list of these identities (referred to as mobile device ID in **FIG. 2****).**

A mobile communication device 210 may request content (such as video content for example) from server 250, e.g. in an HTTP-request. Proxy node 240 receives this request (via radio network 220). Proxy node 240 may compare the MSISDN or IMSI of the requesting device to the mobile device identity list 245 (i.e. stored identities). The requested content is also evaluated to determine if it is of a type (such as a video for example) that is subjected to throttling.

If the identity (MSISDN or IMSI) of the mobile communication device requesting content is not on list 245, then the request is forwarded to content server 250. The requested content may then be provided by content server 250 to requesting mobile communication device 210 (via proxy node 240 and radio network 220 or via radio network 220).

If the MSISDN or IMSI (of the requesting mobile communication device) is on mobile device identity list 245, proxy node 240 notifies requesting mobile communication device 210 that the cell is too crowded or congested to facilitate adequate quality in the provision of the requested service. This notification may be provided in the form of a web page of a mobile browser or via a short message service (SMS). The notification may also indicate that high capacity data transfer (such as video) within the congested cell is subject to bit rate throttling. The content request may not be processed further or it may be placed in a queue.

In some embodiments, requests for certain content may be forwarded to server 250 even if the mobile communication device identity is in the list. This content may not include videos or gaming for example.

In some embodiments, the user may be located in a non-congested cell when making a request for video. The video is received and presented to the user. As the user continues to view the video, he or she may move to a congested cell. Upon entering the congested cell (or when a mobile communication device moves from one cell to another cell), proxy node 240 compares the mobile communication device identity in the manner described above and provides the congested cell notification.

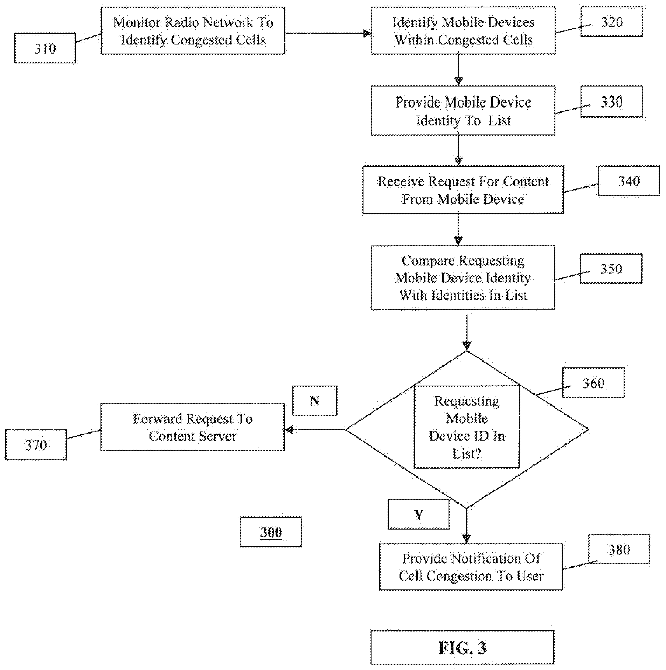

A method in accordance with an exemplary embodiment is illustrated in **FIG. 3****.** A monitor node monitors a radio network to identify congested cells at 310. The congested cells can be implementing bit rate throttling for example. Mobile devices within these congested cells are identified at 320. The mobile devices within the congested cells can be identified by their respective MSISDN or IMSI for example. The identity of the mobile devices is stored in a (mobile communication device identifier) list at 330.

A user can request content or data (from a content server for example) via a mobile communication device, and the request is received, e.g. by a proxy node, at 340. The requesting mobile communication device identity (MSISDN or IMSI) is compared (by a proxy node for example) with mobile communication device identity list at 350. The comparison can include determining if the requesting mobile device identification is on the list at 360. If the mobile communication device identity does not match the identities stored in the list, the request is forwarded to content server at 370. If the mobile communication device identity matches the identities in the list, a notification is provided to the user informing the user of a congested cell implementing bit rate throttling at 380.

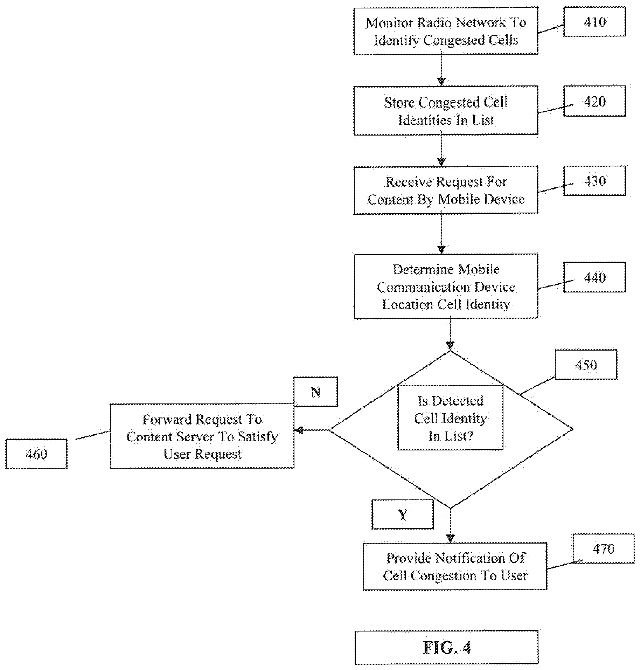

A method in accordance with another exemplary embodiment is illustrated in **FIG. 4****.** A monitor node monitors a radio network to identify congested cells implementing, e.g. bit rate throttling at 410. The identity of the congested cells implementing bit rate throttling is stored in a cell list at 420. A mobile communication device can request content or data from a content server, and the request is received, e.g. by a proxy node, at 430. The identity of the cell within which the requesting mobile communication device is located is determined by a proxy node at 440.

The cell identity is compared to cell identities in the list at 450. If the cell identity does not match any of the cell identities in the list, the request is forwarded to content server at 460. If the cell identity matches a cell identity in the list, a notification is provided to the user that informs the user of a congested cell implementing, e.g. bit rate throttling at 470.

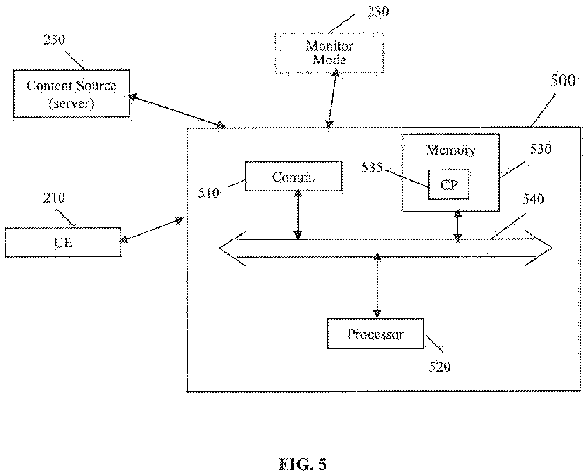

A node (such as proxy node 240 of **FIG. 2****)** in accordance with exemplary embodiments is illustrated in **FIG. 5****.** Node 500 may be located on a network such as a radio network, a public network, a private network or a combination thereof. Node 500 may include a communication interface 510, a processor 520 and computer readable medium 530 in the form of a memory. The communication interface, the processor and the computer readable medium may all may be interconnected via bus 540.

Node 500 may communicate with a monitor node 230, a (user) mobile communication device 210 and a content server 250 via the communication interface 510. Communication interface 510 may transmit to and/or receive from data from these devices. Processor 520 may be a plurality of processors. Node 500 may receive mobile communication device identification information from a monitor mode 230 (as described in **FIG. 2****).** The received information can be stored within memory 530 (i.e. mobile device identification list). Node 500 can receive user requests (via the user mobile communication device) for content (available) from a content source such as the content server.

Processor 520 determines the identity of the mobile communication device communicating with node 500 (requesting content for example). Processor 520 compares the mobile device identification with the communication device identities stored in the list. If the (requesting) mobile communication device identifier is not on the list, processor 520 submits the user request (via 510) to the content server. If the mobile communication device identifier is on the list, processor 520 generates a notification of a congested cell utilizing, e.g. bit rate throttling and communicates this notification (via 510) to the requesting mobile communication device.

In order for processor 520 to be able to perform the steps illustrated in **FIGs. 3** and **4****,** memory 530 comprises a computer program (CP) 535 with computer program modules which when run by the (one or more) processors 520 causes node 500 to perform all or some of the steps illustrated in **FIGs. 3** and **4****.**

An advantage realized by exemplary embodiments as described is that the user of a mobile communication device can be informed about when or why a service (like video) is not accessible for viewing or reasons for quality degradation.

## Claims

1. A method (300) for communicating cell congestion information to a mobile communication device (210), the method (300) comprising the steps of:
receiving (340) a request for content from the mobile communication device (210);
evaluating the requested content to determine whether the requested content is a high capacity data transfer that is subjected to bit rate throttling;
comparing (350) an identity of the mobile communication device (210) with stored mobile communication device identities (245), wherein the stored mobile communication device identities (245) are identities of mobile communication devices (210) within congested cells; and
notifying (380) the mobile communication device (210) of cell congestion if the mobile communication device identity matches one of the stored mobile communication device identity (245); wherein said notifying further comprising indicating that the high capacity data transfer within the congested cell is subjected to the bit rate throttling.

2. The method (300) of claim 1, further comprising:
monitoring (310) a radio network (220) to identify the congested cells implementing bit rate throttling;
identifying (320) the mobile communication devices (210) within the congested cells; and
storing (330) the identities of the mobile communication devices (210) within the congested cells in a throttle list.

3. The method (300) of claim 1 or 2, further comprising:
identifying the mobile communication device (210) by a mobile station international subscriber directory number, MSIDN, associated with the mobile communication device (210).

4. The method (300) of claim 1 or 2, further comprising:
identifying the mobile communication device (210) by an international mobile subscriber identity, IMSI, associated with the mobile communication device (210).

5. The method (300) of any of the preceding claims, further comprising:
providing the notification to the mobile communication device (210) via at least one of a web page and a short message service, SMS.

6. The method (300) of any of the preceding claims, further comprising:
communicating the request for content to a content server (250) if the mobile communication device identity does not match the stored mobile communication device identity (245).

7. A system (200) for providing cell congestion notification to a mobile communication device (210), the system (200) comprising:
a monitor node (230) connected to a radio network (220) and being configured to monitor the radio network (220) to identify congested cells within the radio network (220) and to identify mobile communication devices (210) associated with the congested cells; and
a proxy node (240) connected to the monitor node (230) and to the radio network (220), the proxy node (240) being configured to:
store identities of the mobile communication devices (210) associated with the congested cells;
receive a request for content from the mobile communication device (210), and compare an identity of the requesting mobile communication device (210) with the stored mobile communication device identities (245),
evaluate the requested content to determine whether the requested content is a high capacity data transfer that is subjected to bit rate throttling; and
provide a notification of cell congestion if the identity of the requesting mobile communication device (210) matches one of the stored mobile communication device identities (245);
wherein the notification further indicates that the high capacity data transfer within the congested cell is subjected to the bit rate throttling.

8. The system (200) of claim 7, wherein the proxy node (240) provides the notification to the mobile communication device (210) via one of a web page on a mobile browser and a short message service.

9. The system (200) of claim 7 or 8, further comprising:
a content server (250) having content stored therein, the content corresponding to a content requested by the mobile communication device (210).

10. The system (200) of claim 9, wherein the proxy node (240) is intermediate the mobile communication device (210) and the content server (250).

11. The system (200) of claim 10, wherein the content server (250) is configured to receive the request for content from the mobile communication device (210) via the proxy node (240), when the requesting mobile communication device (210) is located in a non-congested cell.

12. A network node (500) comprising:
a communication interface ( 510) for receiving identities of mobile communication devices (210) in congested cells and requests for content from a mobile communication device (210) and for transmitting a notification to the requesting mobile communication device (210);
a memory ( 530) for storing the received identities of mobile communication devices(210) associated with the congested cells; and
a processor (520) for determining if a content request originated from a congested cell by evaluating the requested content to determine whether the requested content is a high capacity data transfer that is subjected to bit rate throttling and comparing an identity of the requesting mobile communication device (210) with the stored mobile communication device identities (245) and for generating the notification if the mobile communication device identity matches one of the stored mobile communication device identity (245); wherein the notification further indicates that the high capacity data transfer within the congested cell is subjected to the bit rate throttling.

13. The network node (500) of claim 12, wherein the communication interface (510) is further configured to communicate the request for content to a content server (250) if the processor (520) determines that the content request did not originate from the congested cell.

14. The network node (500) of claim 12, wherein the processor (520) is further configured to generate the notification that the requested content is not available due to congestion.

## Patentansprüche

1. Verfahren (300) zum Übermitteln von Zellenüberlastungsinformationen an eine mobile Kommunikationsvorrichtung (210), wobei das Verfahren (300) die Schritte umfasst:
Empfangen (340) einer Inhaltsanforderung von der mobilen Kommunikationsvorrichtung (210);
Auswerten des angeforderten Inhalts, um zu bestimmen, ob der angeforderte Inhalt eine Datenübertragung mit hoher Kapazität ist, die einer Bitraten-Drosselung unterliegt; und
Vergleichen (350) einer Identität der mobilen Kommunikationsvorrichtung (210) mit gespeicherten Identitäten (245) mobiler Kommunikationsvorrichtungen, wobei die gespeicherten Identitäten (245) mobiler Kommunikationsvorrichtungen Identitäten mobiler Kommunikationsvorrichtungen (210) innerhalb überlasteter Zellen sind; und
Benachrichtigen (380) der mobilen Kommunikationsvorrichtung (210) über eine Zellenüberlastung, wenn die Identität der mobilen Kommunikationsvorrichtung mit einer der gespeicherten Identität (245) der mobilen Kommunikationsvorrichtung übereinstimmt; wobei das Benachrichtigen ferner das Anzeigen umfasst, dass die Datenübertragung mit hoher Kapazität innerhalb der überlasteten Zelle der Bitraten-Drosselung unterliegt.

2. Verfahren (300) nach Anspruch 1, das ferner umfasst:
Überwachen (310) eines Funknetzes (220), um die überlasteten Zellen zu identifizieren, die eine Bitraten-Drosselung durchführen;
Identifizieren (320) der mobilen Kommunikationsvorrichtungen (210) innerhalb der überlasteten Zellen; und
Speichern (330) der Identitäten der mobilen Kommunikationsvorrichtungen (210) innerhalb der überlasteten Zellen in einer Drosselungsliste.

3. Verfahren (300) nach Anspruch 1 oder 2, das ferner umfasst:
Identifizieren der mobilen Kommunikationsvorrichtung (210) durch eine der mobilen Kommunikationsvorrichtung (210) zugeordnete internationale Teilnehmerverzeichnisnummer der Mobilstation, MSIDN.

4. Verfahren (300) nach Anspruch 1 oder 2, das ferner umfasst:
Identifizieren der mobilen Kommunikationsvorrichtung (210) durch eine internationale Mobilteilnehmeridentität, IMSI, die der mobilen Kommunikationsvorrichtung (210) zugeordnet ist.

5. Verfahren (300) nach einem der vorhergehenden Ansprüche, das ferner umfasst:
Bereitstellen der Benachrichtigung an die mobile Kommunikationsvorrichtung (210) über wenigstens eine/einen einer Webseite und eines Kurznachrichtendiensts, SMS.

6. Verfahren (300) nach einem der vorhergehenden Ansprüche, das ferner umfasst:
Übermitteln der Inhaltsanforderung an einen Inhaltsserver (250), wenn die Identität der mobilen Kommunikationsvorrichtung nicht mit der gespeicherten Identität (245) der mobilen Kommunikationsvorrichtung übereinstimmt.

7. System (200) zum Bereitstellen einer Zellenüberlastungsbenachrichtigung für eine mobile Kommunikationsvorrichtung (210), wobei das System (200) umfasst:
einen Überwachungsknoten (230), der mit einem Funknetz (220) verbunden ist und dazu konfiguriert ist, das Funknetz (220) zu überwachen, um überlastete Zellen innerhalb des Funknetzes (220) zu identifizieren und um mobile Kommunikationsvorrichtungen (210) zu identifizieren, die den überlasteten Zellen zugeordnet sind; und
einen Proxy-Knoten (240), der mit dem Überwachungsknoten (230) und mit dem Funknetz (220) verbunden ist, wobei der Proxy-Knoten (240) konfiguriert ist, zum:
Speichern von Identitäten der mobilen Kommunikationsvorrichtungen (210), die den überlasteten Zellen zugeordnet sind;
Empfangen einer Inhaltsanforderung von der mobilen Kommunikationsvorrichtung (210) und Vergleichen einer Identität der anfordernden mobilen Kommunikationsvorrichtung (210) mit den gespeicherten Identitäten (245) mobiler Kommunikationsvorrichtungen,
Auswerten des angeforderten Inhalts, um zu bestimmen, ob der angeforderte Inhalt eine Datenübertragung mit hoher Kapazität ist, die einer Bitraten-Drosselung unterliegt; und
Bereitstellen einer Benachrichtigung über eine Zellenüberlastung, wenn die Identität der mobilen Kommunikationsvorrichtung (210) mit einer der gespeicherten Identitäten (245) der mobilen Kommunikationsvorrichtung übereinstimmt;
wobei die Benachrichtigung ferner anzeigt, dass die Datenübertragung mit hoher Kapazität innerhalb der überlasteten Zelle der Bitraten-Drosselung unterliegt.

8. System (200) nach Anspruch 7, wobei der Proxy-Knoten (240) die Benachrichtigung an die mobile Kommunikationsvorrichtung (210) über eine/einen einer Webseite in einem mobilen Browser und eines Kurznachrichtendiensts bereitstellt.

9. System (200) nach Anspruch 7 oder 8, das ferner umfasst:
einen Inhaltsserver (250) mit darauf gespeichertem Inhalt, wobei der Inhalt einem von der mobilen Kommunikationsvorrichtung (210) angeforderten Inhalt entspricht.

10. System (200) nach Anspruch 9, wobei der Proxy-Knoten (240) zwischen der mobilen Kommunikationsvorrichtung (210) und dem Inhaltsserver (250) liegt.

11. System (200) nach Anspruch 10, wobei der Inhaltsserver (250) dazu konfiguriert ist, die Inhaltsanforderung von der mobilen Kommunikationsvorrichtung (210) über den Proxy-Knoten (240) zu empfangen, wenn sich die anfordernde mobile Kommunikationsvorrichtung (210) in einer nicht überlasteten Zelle befindet.

12. Netzknoten (500), umfassend:
eine Kommunikationsschnittstelle (510) zum Empfangen von Identitäten von mobilen Kommunikationsvorrichtungen (210) in überlasteten Zellen und von Inhaltsanforderungen von einer mobilen Kommunikationsvorrichtung (210) und zum Übertragen einer Benachrichtigung an die anfordernde mobile Kommunikationsvorrichtung (210);
einen Speicher (530) zum Speichern der empfangenen Identitäten von mobilen Kommunikationsvorrichtungen (210), die den überlasteten Zellen zugeordnet sind; und
einen Prozessor (520) zum Bestimmen, ob eine Inhaltsanforderung von einer überlasteten Zelle stammt, indem der angeforderte Inhalt ausgewertet wird, um zu bestimmen, ob der angeforderte Inhalt eine Datenübertragung mit hoher Kapazität ist, die einer Bitraten-Drosselung unterliegt, und zum Vergleichen einer Identität der anfordernden mobilen Kommunikationsvorrichtung (210) mit den gespeicherten Identitäten (245) der mobilen Kommunikationsvorrichtungen und zum Erzeugen der Benachrichtigung, wenn die Identität der mobilen Kommunikationsvorrichtung mit einer der gespeicherten Identität (245) der mobilen Kommunikationsvorrichtungen übereinstimmt; wobei die Benachrichtigung ferner anzeigt, dass die Datenübertragung mit hoher Kapazität innerhalb der überlasteten Zelle der Bitraten-Drosselung unterliegt.

13. Netzknoten (500) nach Anspruch 12, wobei die Kommunikationsschnittstelle (510) ferner dazu konfiguriert ist, die Inhaltsanforderung an einen Inhaltsserver (250) zu übermitteln, wenn der Prozessor (520) bestimmt, dass die Inhaltsanforderung nicht von der überlasteten Zelle stammt.

14. Netzknoten (500) nach Anspruch 12, wobei der Prozessor (520) ferner dazu konfiguriert ist, die Benachrichtigung zu erzeugen, dass der angeforderte Inhalt aufgrund von Überlastung nicht verfügbar ist.

## Revendications

1. Procédé (300) pour communiquer des informations d'encombrement de cellule à un dispositif de communication mobile (210), le procédé (300) comprenant les étapes consistant à :
recevoir (340) une demande de contenu à partir du dispositif de communication mobile (210) ;
évaluer le contenu demandé pour déterminer si le contenu demandé est un transfert de données à haute capacité qui est soumis à une limitation du débit binaire ;
comparer (350) une identité du dispositif de communication mobile (210) avec des identités de dispositifs de communication mobile stockées (245), dans lequel les identités de dispositif de communication mobile stockées (245) sont des identités de dispositifs de communication mobile (210) dans des cellules encombrées ; et
notifier (380) le dispositif de communication mobile (210) d'un encombrement de cellule si l'identité du dispositif de communication mobile correspond à l'une des identités de dispositifs de communication mobile stockées (245) ; dans lequel ladite notification comprend en outre l'indication que le transfert de données à haute capacité à l'intérieur de la cellule encombrée est soumis à la limitation du débit binaire.

2. Procédé (300) selon la revendication 1, comprenant en outre
la surveillance (310) d'un réseau radio (220) pour identifier les cellules encombrées mettant en œuvre une limitation de débit binaire ;
l'identification (320) des dispositifs de communication mobile (210) à l'intérieur des cellules encombrées ; et
le stockage (330) des identités des dispositifs de communication mobile (210) à l'intérieur des cellules encombrées dans une liste de limitation.

3. Procédé (300) selon la revendication 1 ou 2, comprenant en outre :
l'identification du dispositif de communication mobile (210) par un numéro d'annuaire d'abonné international de la station mobile, MSIDN, associé au dispositif de communication mobile (210).

4. Procédé (300) selon la revendication 1 ou 2, comprenant en outre :
l'identification du dispositif de communication mobile (210) par une identité internationale d'abonné mobile, IMSI, associée au dispositif de communication mobile (210).

5. Procédé (300) selon l'une quelconque des revendications précédentes, comprenant en outre :
la fourniture de la notification au dispositif de communication mobile (210) via au moins l'un d'une page Web et d'un service de messages courts, SMS.

6. Procédé (300) selon l'une quelconque des revendications précédentes, comprenant en outre :
la communication de la demande de contenu à un serveur de contenu (250) si l'identité du dispositif de communication mobile ne correspond pas à l'identité de dispositif de communication mobile stockée (245).

7. Système (200) pour fournir une notification d'encombrement de cellule à un dispositif de communication mobile (210), le système (200) comprenant :
un noeud de surveillance (230) connecté à un réseau radio (220) et étant configuré pour surveiller le réseau radio (220) pour identifier les cellules congestionnées dans le réseau radio (220) et pour identifier les dispositifs de communication mobile (210) associés aux cellules congestionnées ; et
un noeud mandataire (240) connecté au noeud de surveillance (230) et au réseau radio (220), le noeud mandataire (240) étant configuré pour :
stocker les identités des dispositifs de communication mobile (210) associés aux cellules encombrées ;
recevoir une demande de contenu à partir du dispositif de communication mobile (210), et comparer une identité du dispositif de communication mobile demandeur (210) avec les identités de dispositifs de communication mobile stockées (245),
évaluer le contenu demandé pour déterminer si le contenu demandé est un transfert de données à haute capacité soumis à une limitation du débit binaire ; et
fournir une notification d'encombrement de cellule si l'identité du dispositif de communication mobile demandeur (210) correspond à l'une des identités de dispositifs de communication mobile stockées (245) ;
dans lequel la notification indique en outre que le transfert de données à haute capacité à l'intérieur de la cellule encombrée est soumis à la limitation du débit binaire.

8. Système (200) selon la revendication 7, dans lequel le noeud mandataire (240) fournit la notification au dispositif de communication mobile (210) via une page Web sur un navigateur mobile et un service de messages courts.

9. Système (200) selon la revendication 7 ou 8, comprenant en outre :
un serveur de contenu (250) dans lequel est stocké un contenu, le contenu correspondant à un contenu demandé par le dispositif de communication mobile (210).

10. Système (200) selon la revendication 9, dans lequel le noeud mandataire (240) est intermédiaire entre le dispositif de communication mobile (210) et le serveur de contenu (250).

11. Système (200) selon la revendication 10, dans lequel le serveur de contenu (250) est configuré pour recevoir la demande de contenu à partir du dispositif de communication mobile (210) via le noeud mandataire (240), lorsque le dispositif de communication mobile demandeur (210) est situé dans une cellule non encombrée.

12. Noeud de réseau (500) comprenant :
une interface de communication (510) pour recevoir des identités de dispositifs de communication mobile (210) dans des cellules encombrées et des demandes de contenu à partir d'un dispositif de communication mobile (210) et pour transmettre une notification au dispositif de communication mobile demandeur (210) ;
une mémoire (530) pour stocker les identités reçues des dispositifs de communication mobile (210) associés aux cellules encombrées ; et
un processeur (520) pour déterminer si une demande de contenu provient d'une cellule encombrée en évaluant le contenu demandé pour déterminer si le contenu demandé est un transfert de données à haute capacité qui est soumis à une limitation du débit binaire et comparer une identité du dispositif de communication mobile demandeur (210) avec les identités de dispositifs de communication mobile stockées (245) et pour générer la notification si l'identité de dispositif de communication mobile correspond à l'une des identités de dispositifs de communication mobile stockée (245) ; dans lequel la notification indique en outre que le transfert de données à haute capacité à l'intérieur de la cellule encombrée est soumis à la limitation du débit binaire.

13. Noeud de réseau (500) selon la revendication 12, dans lequel l'interface de communication (510) est en outre configurée pour communiquer la demande de contenu à un serveur de contenu (250) si le processeur (520) détermine que la demande de contenu ne provient pas de la cellule congestionnée.

14. Noeud de réseau (500) selon la revendication 12, dans lequel le processeur (520) est en outre configuré pour générer la notification que le contenu demandé n'est pas disponible en raison d'une congestion.
